# EUROPEAN PATENT APPLICATION

(11) **EP 2 669 584 A2**
(43) Date of publication of application: **04.12.2013**
(21) Application number: 13169859.9
(22) Date of filing: 30.05.2013
(51) Int. Cl.: F24D 3/18, F24D 11/02, F24D 19/00

(54) **Device for cooling and/or heating buildings**

(30) Priority: 30.05.2012 NL 2008905
(71) Applicant: Adviesbureau A. van Rijsewijk B.V., 5076 NR Haaren (NL)
(72) Inventor: van Rijsewijk, Adrianus Gijsbertus Maria, 5076 NR Haaren (NL)
(74) Representative: Nederlandsch Octrooibureau

(57) **Abstract**

The invention relates to a device for heating and/or cooling a building comprising: a first circuit for a first liquid between a heat reservoir and a heat exchanger for exchanging heat, a second circuit for a second liquid between the heat exchanger and a first heat pump and a third circuit for a third liquid between the first heat pump and a radiator/convector in a room of the building, a pipe system provided with controllable valves and pumps and a control unit which is connected to the controllable valves and the pumps in order to produce the first circuit, the second circuit and the third circuit. In order to reduce the installation time and to increase the capacity of the device in stages, the device comprises modules, in which a module comprises a frame and a part of the pipe system, the part of the pipe system in the respective modules comprising pipe parts which are provided at their ends with connecting flanges for connecting a first module to a second module, and the connecting flanges of the first and the second module are attached to the respective frames according to a fixed geometric configuration, so that the connecting flanges of the first module are connectable to the connecting flanges of the second module.

## Description

The invention relates to a device for cooling/heating buildings. The invention furthermore relates to a method for installing a device for cooling and/or heating buildings.

Such a device may be used for heating and/or cooling one or several buildings by withdrawing or supplying heat from groundwater. The known device comprises a first circuit for a first liquid between a heat reservoir and a heat exchanger for exchanging heat, a second circuit for a second liquid between the heat exchanger and a first heat pump and a third circuit for a third liquid between the first heat pump and a distributor connected to a radiator/convector in a room of the building, and a pipe system provided with the controllable valves and pumps and a control unit for operating the controllable valves and pumps in order to produce the first circuit, the second circuit and the third circuit. In summer, the control unit may be configured for dissipating heat from the room in the building to be cooled to the heat reservoir. In winter, the control unit may be configured for heating by means of heat from the heat reservoir. The device may be installed in a technical room of a building or a complex of buildings. GB 2334089 shows a known device for cooling and heating a building, comprising radiators connected to heat exchangers of a heat pump, which also comprises a second heat exchanger which is connected to a water circuit in the ground. During winter, the heat pump provides warm water to the radiators. On hot summer days, the valves switch off the heat pump and cold water is circulated from the water circuit to the radiators, which now cool the building. On hot summer days, the heat pump is used to cool a water circuit extending through the building. A heat exchanger connects the water circuit in the ground to a second heat pump which is used to heat water in a hot water store throughout the year. The heat exchanger of the second heat pump may have its own water circuit in the ground.

Installation of the device in a technical room in a building and in particular the pipe system may be complicated, which may lead to mistakes being made and result in the device not functioning or not functioning in an optimum manner. A further drawback may present itself when the device is being used to heat and cool a complex of buildings which is being extended by one or more buildings. In order for the device to function in an optimum manner, the capacity of the device has to be adapted to the maximum demand of the buildings. During building of a complex, the device can hardly operate at maximum capacity, if at all, and therefore the device will operate in an optimum manner.

A further drawback is the fact that the floor area of a technical room of a building in which the installation has to be fitted has to be estimated beforehand and is consequently often overestimated.

It is an object of the present invention to provide a device and a method which overcome the abovementioned drawbacks.

According to a first aspect of the invention, this object is achieved by means of a device according to Claim 1. By accommodating part of the pipe system of the second and the third circuit in the modules, the capacity can be increased in stages. The modules are able to accommodate the various parts of the device, such as for example the heat pump, the heat exchanger and buffer vessels. By accommodating part of the pipe system in the modules, it is furthermore possible to render the geometric configuration of the connections for each module uniform, thus preventing mistakes during installation of the device from being made. The modular construction of the device according to the invention makes it possible to design and install devices having a power output of, for example, 50 kW to 1500 kW. Due to the fact that the dimensions of the modules per unit capacity and the total capacity required for the building are known beforehand, the required floor area of a technical room can be estimated more accurately. Furthermore, it is possible to take into account a future increase in capacity during the design and installation stage in a simple manner.

By fitting the connecting flanges, the modules can be coupled to each other in a simple manner. As the connecting flanges of the first and the second module are attached to the respective frames according to a fixed identical geometric configuration, the modules can always be connected to each other in the same manner and the risk of mistakes being made while connecting the modules is reduced.

A further advantage is the fact that the floor area of a technical room in which the device is installed may be smaller than the floor area of a technical room in which a conventional device of the same capacity as the device according to the invention is arranged, since the modules may be designed to be compact and to be assembled outside the technical room.

In an embodiment of the device, the part of the pipe system in the respective modules comprises pipe parts, which are provided at each end with connecting flanges for connecting a first module to a second module.

In an embodiment, the device comprises a second heat pump for conveying heat between the second circuit and the third circuit, wherein the first module comprises the first heat pump and the second module comprises the second heat pump. Due to this configuration, the capacity of the device can be designed and built in accordance with a modular system while taking into account a possible future extension of the device. Due to the fact that the modules are coupled to each other in a uniform manner, the risk of mistakes during assembly can be reduced.

In another embodiment, the device comprises buffer vessels which are coupled to the second and third circuit, respectively, for temporarily storing respective hot and cold liquids. The buffer vessels enable the heat pumps to operate at their optimum capacity.

In a further embodiment, the first module comprises the heat pump and the second module comprises the buffer vessels.

In another embodiment, the device comprises a heat exchanger which is connected between the first and the second circuit. In this configuration, the heat exchanger conveys heat from the first circuit to the second circuit or vice versa.

In a further embodiment, the first module comprises the heat pump and the second module comprises the heat exchanger.

In a further embodiment, the connecting flanges are arranged on opposite sides of the modules.

The invention also relates to a module for use in a device according to Claims 1-6.

According to a second aspect of the invention, said object is achieved by a method according to Claim 7.

Although the invention will be described with reference to a number of preferred embodiments, the invention is not limited thereto. The embodiments to be described are only examples of possible interpretations of the invention and it will be clear to the person skilled in the art that the advantages of the invention can also be achieved in a different way.

The invention will be described below with reference to the attached drawings, in which:
Fig. 1 shows a diagrammatic overview of a first embodiment of a device,
Fig. 2 shows a perspective view of a module of the device, and
Fig. 3 shows a diagrammatic overview of an embodiment comprising three interconnected modules.

In the figures, similar parts are referred to by identical reference numerals.

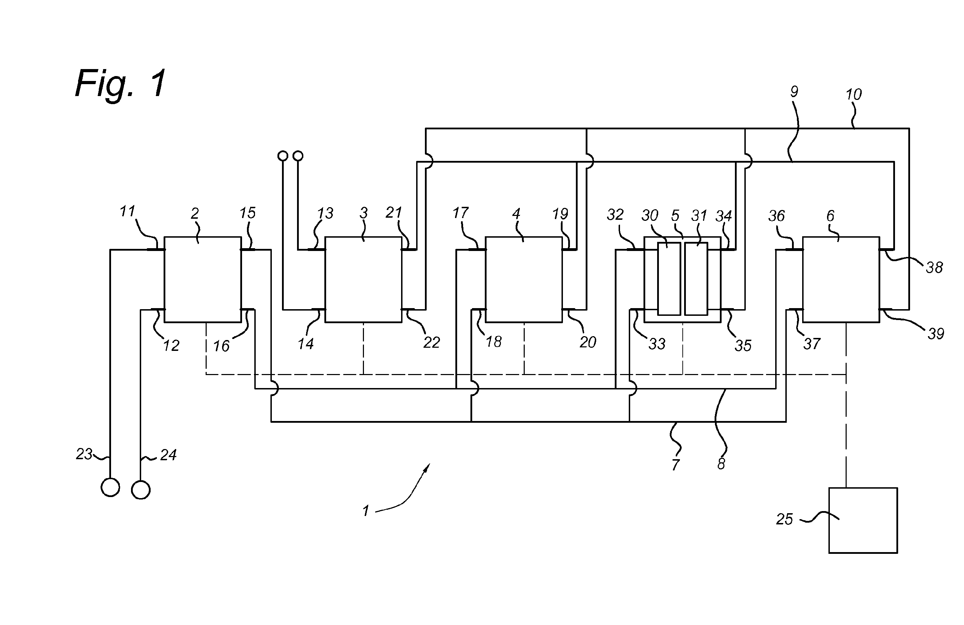

Fig. 1 shows a diagrammatic overview of a first embodiment of a device 1. The device 1 can be used as a geothermal heat pump device for heating and/or cooling a building. The device 1 comprises a first circuit for a first liquid, for example water, between a heat reservoir connected to connections 11,12 and a heat exchanger 2 for exchanging heat. The device furthermore comprises a second circuit for a second liquid, for example water, between the connections 15,16 of the heat exchanger 2 and the connections 17,18 of a first heat pump 4, wherein the heat exchanger can exchange heat between the first and the second circuit. The device 1 furthermore comprises a third circuit for a third liquid, for example water, between the connections 19,20 of the first heat pump 4 and the connections 21,22 of a distributor 3 which is connected to a radiator/convector in a room of the building by means of connections 13,14. The device 1 furthermore comprises a pipe system 7,8,9,10,23,24 provided with controllable valves and pumps (not shown), and a control unit 25 which is connected to the controllable valves and the pumps in order to produce the first circuit 11,12, the second circuit 15,16,17,18 and the third circuit 19,20,21,22. The control unit 25 is configured to enable the device 1 to operate, in order to respectively heat and cool one or more rooms of the building, depending on the wishes of the users.

The device 1 may furthermore be provided with buffer vessels 30,31 which are incorporated in the second circuit via the pipes 7,8 and the third circuit via pipes 9,10, respectively.

The device further comprises modules 50, wherein a module comprises a frame and a part of the pipe system. The modules may furthermore be provided with the heat pump 4, the distributor 3, the heat exchanger 2 and the buffer vessels 30,31, respectively, in order to produce the second 15,16,17,18 and third circuit 19,20,21,22.

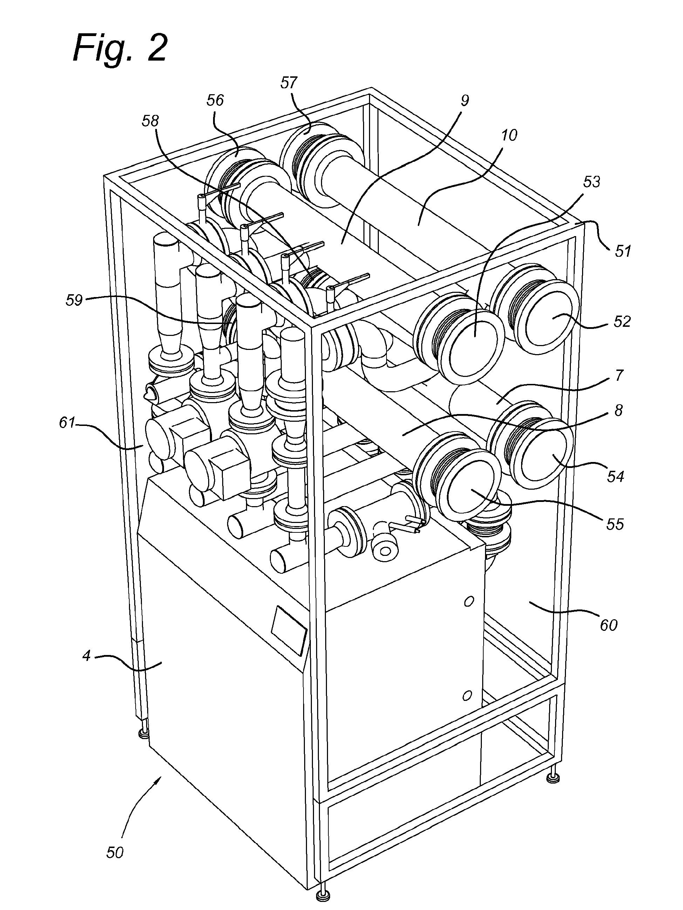

Fig. 2 shows a perspective view of an embodiment of a module 50. The module 50 comprises the frame 51 and a part of the pipe system which comprises pipe parts 7,8,9,10, the ends of which are provided with connecting flanges 52,53,54,55 which are fitted in a first geometric configuration to a first side 60 of the frame 51 of the module and connecting flanges 56,57,58,59 which are fitted to a second side 61 of the frame 51 of the module 50 according to the same geometric configuration as the configuration of the connecting flanges 52,53,54,55 on the first side of the module, with the diameters of the connecting flanges 52,53,54,55 on the first side 60 being identical to the diameters of the connecting flanges 57,58,59,60 on the second side 61. In this case, the first side 60 may be situated opposite the second side 61. As a result, the connecting flanges 52,53,54,55 of a first module may be directly connected to the respective connecting flanges 56,57,58,59 of a second module, as a result of which installation can be carried out more quickly and the risk of mistakes is reduced. If desired, the installation can be extended by a third and a fourth module, the connections of which are arranged according to the same geometric configuration so that the modules can be connected in the same manner.

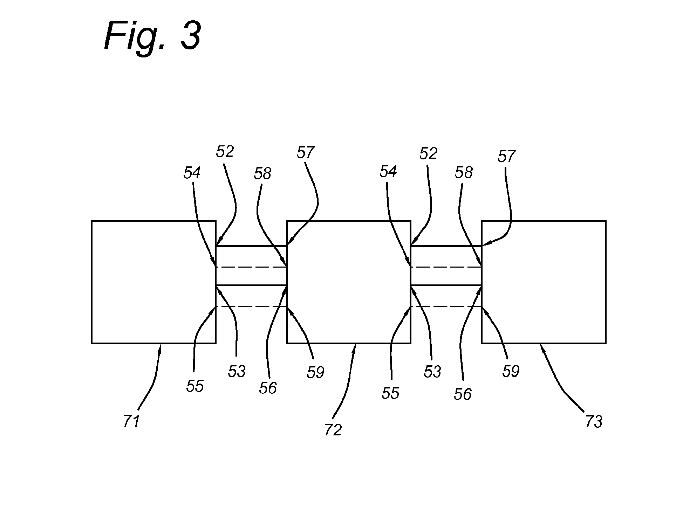

Fig. 3 shows a diagrammatic overview of an embodiment comprising three interconnected modules 71, 72 73 which are of identical construction to the module 50, as is illustrated in Fig. 2. Fig. 3 furthermore shows the connecting flanges 52, 53, 54,55 of the respective modules 71,72 and the connecting flanges 56,57,58,59 of the respective modules 72,73. The connecting flanges 52,53,54, 55 of the respective modules 71,72 have the same geometric configuration as the connecting flanges 56,57,58,59 of the respective modules 72, 73. The respective modules 71,72 and the modules 72,73 can now be connected to each other in the same manner via the respective connecting flanges 52, 53, 54, 55 of the modules 71,72 and the connecting flanges 56, 57, 58, 59 of the modules 72,73 by means of, for example, straight connecting pipe parts.

In this embodiment, the connecting flanges are arranged on opposite sides. In alternative embodiments, the connecting flanges 52, 53, 54, 55; 56, 57, 58, 59 may be arranged on adjoining sides of the module.

In a further embodiment of the device 1, the first module 50 may comprise a first heat pump 4 and the second module 50 may comprise a second heat pump 6, with the heat pump 4 being connected to the pipes 7,8 and 9,10 of the pipe system by means of the connections 36,37 and 38,39. Due to the modular construction of the device, the installation of the device in a technical room of a building can always be carried out in a similar manner. During installation, it is readily possible to take into account a planned modular extension of the device.

In an embodiment, the first module comprises the first heat pump 4 and the second module comprises the buffer vessels 30,31, with the connections 32,33 of the first buffer vessel 30 being connected via the pipes 7,8 of the pipe system and the connections 34,35 of the second buffer vessel 31 being connected via the pipes 9,10 of the pipe system.

In an embodiment, the second module comprises the heat exchanger 2, with the connections 15,16 of the heat exchanger being connected to the pipes 7,8 of the pipe system.

An embodiment of the method for constructing the device 1 for heating or cooling a building comprises producing a first circuit for a first liquid, for example water, between a heat reservoir and a heat exchanger 2 for exchanging heat, producing a second circuit for a second liquid, for example water, between the heat exchanger 2 and a first heat pump 4 and producing a third circuit for a third liquid, for example between the first heat pump 4 and a distributor 3 to a radiator/convector in a room of the building, and fitting a pipe system provided with controllable valves and pumps and a control unit 25 which is connected to the controllable valves in order to produce the first circuit, the second circuit and the third circuit, wherein fitting the pipe system comprises the installation of modules 50 which comprise a frame 51 and a part of the pipe system 7,8,9,10 in order to produce the second and third circuit.

## Claims

1. Device (1) for heating and/or cooling a building comprising:
a first circuit for a first liquid between a heat reservoir and a heat exchanger (2) for exchanging heat,
a second circuit for a second liquid between the heat exchanger (2) and a first heat pump (4) and a third circuit for a third liquid between the first heat pump and a radiator/convector in a room of the building, a pipe system (7,8,9,10,23,24) provided with controllable valves and pumps and a control unit which is connected to the controllable valves and pumps in order to produce the first circuit, the second circuit and the third circuit, wherein the device comprises modules (50,71,72,73), wherein a module (50,71,72,73) comprises a frame (51) and a part of the pipe system, wherein the part of the pipe system in the respective modules comprises pipe parts, which are provided at each end with connecting flanges (52,53,54,55; 56,57,58,59) for connecting a first module to a second module, and the connecting flanges of the first and the second module are attached to the respective frames (51) according to the same geometric configuration, so that the connecting flanges of the first module are connectable to the connecting flanges of the second module.

2. Device according to Claim 1, wherein the device comprises a second heat pump (6) for conveying heat between the second circuit and the third circuit and wherein the first module comprises the first heat pump (4) and the second module comprises the second heat pump (6).

3. Device according to Claim 1 or 2, wherein the device comprises buffer vessels (30,31) which are coupled to the second and third circuit, respectively, for temporarily storing respective hot and cold liquids.

4. Device according to Claim 3, wherein the first module comprises the first heat pump (4) and the second module comprises the buffer vessels (30,31).

5. Device according to Claims 1-4, wherein the device comprises a heat exchanger (2) which is connected between the first and the second circuit.

6. Device according to Claim 5, wherein the first module comprises the first heat pump (4) and the second module comprises the heat exchanger (2).

7. Device according to Claims 1-6, wherein the connecting flanges (52,53,54,55; 56,57,58,59) are arranged on opposite sides of the modules.

8. Module (50,71,72,73) for use in a device according to Claims 1-7.

9. Method for constructing a device for heating or cooling a building comprising: producing a first circuit for a first liquid between a heat reservoir and a heat exchanger (2) for exchanging heat,
producing a second circuit for a second liquid between the heat exchanger (2) and a first heat pump (4) and producing a third circuit for a third liquid between the first heat pump (4) and a radiator/convector in a room of the building, and fitting a pipe system provided with valves and pumps in order to produce the first circuit, the second circuit and the third circuit, wherein fitting the pipe system comprises the installation of modules (50; 71,72,73) which comprise a frame (51) and a part of the pipe system in order to produce the second and third circuit, wherein the part of the pipe system in the respective modules comprises pipe parts which are provided with connecting flanges at the ends; and
connecting a first module (71) to a second module (72) according to a fixed geometric configuration of the connecting flanges (52,53,54,55; 56,57,58,59) to the respective frames (51).
